# EUROPEAN PATENT APPLICATION

(11) **EP 4 494 472 A1**
(43) Date of publication of application: **22.01.2025**
(21) Application number: 24184832.4
(22) Date of filing: 26.06.2024
(51) Int. Cl.: A23C 11/06, A23L 2/66, A23L 29/00, A23L 29/25, A23L 29/269

(54) **SANZAN GUM-CONTAINING STABILIZER FOR COMPOUND PROTEIN BEVERAGE, AND USE AND COMPOUND PROTEIN BEVERAGE**

(30) Priority: 19.07.2023 CN 202310887062
(71) Applicant: Hebei Fengchuan Biotechnology Co., Ltd., Xingtai Hebei 055650 (CN)
(72) Inventor: QI, Fenghui, Xingtai, 055650 (CN); LIU, Xuezhen, Xingtai, 055650 (CN); JIN, Xiaowei, Xingtai, 055650 (CN)
(74) Representative: Bayramoglu et al.

(57) **Abstract**

The present disclosure provides a Sanzan gum-containing stabilizer for a compound protein beverage, and a use and compound protein beverage, and belongs to the technical field of beverage additives. The Sanzan gum-containing stabilizer for a compound protein beverage provided in the present disclosure includes Sanzan gum and mono- and diglycerides of fatty acids, where a mass ratio of the Sanzan gum to the mono- and diglycerides of fatty acids is (50-75): 100. A compound protein beverage prepared with the Sanzan gum-containing stabilizer for a compound protein beverage provided in the present disclosure has a sensory score of 80 or more, and the Sanzan gum-containing stabilizer can significantly reduce oil slicks at a top and precipitates at a bottom of the beverage and has a better stabilizing effect than xanthan gum and carrageenan systems.

## Description

### TECHNICAL FIELD

The present disclosure relates to the technical field of beverage additives, and in particular to a Sanzan gum-containing stabilizer for a compound protein beverage, and a use and a compound protein beverage.

### BACKGROUND

Compound protein beverages are high-quality protein supplements that are prepared with vegetable proteins and dairy products as main raw materials, have high nutritional values, and are easily digested and absorbed by the human body. However, during the storage process, the compound protein beverages are prone to phenomena such as fat floating, protein denaturation, coagulation and precipitation caused by the protein denaturation, which seriously affect the sensory quality of a product. Therefore, how to provide a stabilizer for a compound protein beverage to prolong the shelf life and stability of the compound protein beverage and ensure the product quality is an urgent technical problem to be solved by those skilled in the art.

### SUMMARY

An objective of the present disclosure is to provide a Sanzan gum-containing stabilizer for a compound protein beverage, and a use and compound protein beverage thereof. The stabilizer of the present disclosure can prolong the shelf life and stability of a compound protein beverage and ensure a product quality.

To allow the above objective of the present disclosure, the present disclosure provides the following technical solutions:
The present disclosure provides a Sanzan gum-containing stabilizer for a compound protein beverage, including Sanzan gum and mono- and diglycerides of fatty acids,
where a mass ratio of the Sanzan gum to the mono- and diglycerides of fatty acids is (50-75): 100.

The present disclosure provides a use of the stabilizer described above in production of a beverage.

The present disclosure provides a use of the stabilizer described above in production of a compound protein beverage.

The present disclosure provides a compound protein beverage including the stabilizer described above.

Preferably, an amount of the stabilizer in the compound protein beverage is 0.15% to 0.175% of a mass of the compound protein beverage.

The present disclosure also provides a preparation method of the compound protein beverage, including the following steps:
(1) mixing the stabilizer with white granulated sugar, adding water, and allowing dissolution under shearing to obtain a colloid solution;
(2) mixing a vegetable protein with sodium bicarbonate, adding water, allowing dissolution under shearing to obtain a solution, and filtering the solution through a 100-mesh to 140-mesh sieve to obtain a filtrate that is a vegetable protein solution;
(3) adding water to an animal protein, allowing dissolution under shearing, and allowing static hydration to obtain an animal protein solution; and
(4) mixing the colloid solution, the vegetable protein solution, and the animal protein solution to obtain a mixed solution, and subjecting the mixed solution to dilution, homogenization, bottling, sterilization, and cooling to obtain the compound protein beverage, where the dilution is a process of diluting a liquid to a predetermined amount or volume.

Preferably, in the step (1), the water has a temperature of 80°C to 85°C, and the shearing is conducted at a rotational speed of 2,800 r/min to 3,200 r/min for 13 min to 17 min;
in the step (2), the water has a temperature of 70°C to 80°C, and the shearing is conducted at a rotational speed of 2,800 r/min to 3,200 r/min for 8 min to 12 min; and
in the step (3), the water has a temperature of 55°C to 60°C, the shearing is conducted at a rotational speed of 2,800 r/min to 3,200 r/min for 4 min to 6 min, and the static hydration is conducted for 28 min to 32 min.

Preferably, in the step (2) and the step (3), the vegetable protein is any one of peanut butter, walnut butter, and almond butter, and the animal protein is whole milk powder.

Preferably, in the step (4), the homogenization is conducted 2 to 3 times at a temperature of 70°C to 75°C and a pressure of 30 MPa to 50 MPa.

Preferably, in the step (4), the sterilization is conducted at a temperature of 121°C to 125°C for 15 min to 20 min.

A compound protein beverage prepared with the Sanzan gum-containing stabilizer for a compound protein beverage provided in the present disclosure has a sensory score of 80 or more, and the Sanzan gum-containing stabilizer can significantly reduce oil slicks at a top and precipitates at a bottom of the beverage and has a better stabilizing effect than xanthan gum and carrageenan systems.

### DETAILED DESCRIPTION OF THE EMBODIMENTS

The present disclosure provides a Sanzan gum-containing stabilizer for a compound protein beverage, including Sanzan gum and mono- and diglycerides of fatty acids,
where a mass ratio of the Sanzan gum to the mono- and diglycerides of fatty acids is (50-75): 100 and preferably 75:100.

The present disclosure provides a use of the stabilizer described above in production of a beverage.

The present disclosure provides a use of the stabilizer described above in production of a compound protein beverage.

The present disclosure provides a compound protein beverage including the stabilizer described above.

In the present disclosure, an amount of the stabilizer in the compound protein beverage is 0.15% to 0.175% and preferably 0.175% of a mass of the compound protein beverage.

The present disclosure also provides a preparation method of the compound protein beverage, including the following steps:
(1) the stabilizer is mixed with white granulated sugar, water is added, and dissolution under shearing is allowed to obtain a colloid solution;
(2) a vegetable protein is mixed with sodium bicarbonate, water is added, dissolution under shearing is allowed to obtain a solution, and the solution is filtered through a 100-mesh to 140-mesh sieve to obtain a filtrate that is a vegetable protein solution;
(3) water is added to an animal protein, dissolution under shearing is allowed, and static hydration is allowed to obtain an animal protein solution; and
(4) the colloid solution, the vegetable protein solution, and the animal protein solution are mixed to obtain a mixed solution, and the mixed solution is subjected to dilution, homogenization, bottling, sterilization, and cooling to obtain the compound protein beverage, where the dilution is a process of diluting a liquid to a predetermined amount or volume.

In the present disclosure, in the step (1), the water has a temperature of 80°C to 85°C, preferably 81°C to 84°C, more preferably 82°C to 83°C, and further more preferably 83°C; the shearing is conducted at a rotational speed of 2,800 r/min to 3,200 r/min, preferably 2,900 r/min to 3,100 r/min, and more preferably 3,000 r/min; and the shearing is conducted for 13 min to 17 min, preferably 14 min to 16 min, and more preferably 15 min.

In the present disclosure, after the vegetable protein is mixed with the sodium bicarbonate, the water is added, and the dissolution under shearing is allowed to obtain the solution, the solution is filtered through the 100-mesh to 140-mesh sieve, preferably a 110-mesh to 130-mesh sieve, and more preferably a 120-mesh sieve to obtain the filtrate that is the vegetable protein solution.

In the present disclosure, in the step (2), the water has a temperature of 70°C to 80°C, preferably 73°C to 77°C, and more preferably 75°C; the shearing is conducted at a rotational speed of 2,800 r/min to 3,200 r/min, preferably 2,900 r/min to 3,100 r/min, and more preferably 3,000 r/min; and the shearing is conducted for 8 min to 12 min, preferably 9 min to 11 min, and more preferably 10 min.

In the present disclosure, in the step (3), the water has a temperature of 55°C to 60°C, preferably 57°C to 59°C, and more preferably 58°C; the shearing is conducted at a rotational speed of 2,800 r/min to 3,200 r/min, preferably 2,900 r/min to 3,100 r/min, and more preferably 3,000 r/min; the shearing is conducted for 4 min to 6 min and preferably 5 min; and the static hydration is conducted for 28 min to 32 min, preferably 29 min to 31 min, and more preferably 30 min.

In the present disclosure, in the step (2) and the step (3), the vegetable protein is any one of peanut butter, walnut butter, and almond butter, and the animal protein is whole milk powder.

In the present disclosure, in the step (4), the homogenization is conducted at a temperature of 70°C to 75°C, preferably 72°C to 74°C, and more preferably 73°C; the homogenization is conducted at a pressure of 30 MPa to 50 MPa, preferably 35 MPa to 45 MPa, and more preferably 40 MPa; and the homogenization is conducted 2 to 3 times and preferably 2 times.

In the present disclosure, in the step (4), the sterilization is conducted at a temperature of 121°C to 125°C, and the sterilization is conducted for 15 min to 20 min, preferably 15 min to 18 min, and more preferably 15 min.

The technical solutions provided by the present disclosure will be described in detail below with reference to examples, but these examples should not be construed as limiting the protection scope of the present disclosure.

In the following examples, the peanut butter, the walnut butter, the almond butter, the white granulated sugar, the Sanzan gum, the xanthan gum, the carrageenan, the mono- and diglycerides of fatty acids, the sodium bicarbonate are all commercially available products; the model of the high-speed dispersion and homogenization machine is FJ-200; the model of the electric-heated thermostatic water bath is DK-98-IIA; the model of the homogenizer is SRH60; the model of the centrifuge is TDL-08-2B; the model of the vertical pressure steam sterilizer is BXM-30R; the model of the electronic balance is WT3003.

### Example 1

0 g, 0.25 g, 0.5 g, 0.75 g, 1.0 g, 1.25 g, and 1.5 g of Sanzan gum were weighed, 1.0 g of mono- and diglycerides of fatty acids was added to each Sanzan gum, and then mixed to obtain Sanzan gum-containing stabilizers.

65 g of white granulated sugar was added to each of the stabilizers to obtain mixtures, and the mixtures were thoroughly mixed, incubated in water at 83°C, and subjected to dissolution under shearing in a stirrer at 3,000 r/min for 15 min to obtain smooth and homogeneous colloid solutions. 20 g of peanut butter was mixed with 1.0 g of sodium bicarbonate, warm water at 75°C was added to obtain a mixture, the mixture was subjected to dissolution under shearing in a stirrer at 3,000 r/min for 10 min to obtain a solution, and the solution was filtered through a 120-mesh sieve to obtain a filtrate that was a vegetable protein solution. 10 g of whole milk powder was added to warm water at 58°C to obtain a mixture, and the mixture was subjected to dissolution under shearing at 3,000 r/min for 5 min and then to static hydration for 30 min to obtain an animal protein solution.

Each colloid solution, the vegetable protein solution, and the animal protein solution were mixed, purified water was added to obtain a mixed solution, and the mixed solution was diluted to 1,000 mL, stirred at 32 r/min for 15 min, and homogenized at a temperature of 73°C and a pressure of 40 MPa twice for 3 min each time.

Each homogenized feed liquid was bottled, sterilized at 121°C for 15 min, and cooled to room temperature to obtain peanut compound protein beverages.

### Example 2

This example was different from Example 1 in that a different vegetable protein was adopted. That is, this example was the same as Example 1, except that 30 g of walnut butter was used instead of the 20 g of peanut butter in Example 1 to obtain walnut compound protein beverages.

### Example 3

This example was different from Example 1 in that a different vegetable protein was adopted. That is, this example was the same as Example 1, except that 25 g of almond butter was used instead of the 20 g of peanut butter in Example 1 to obtain almond compound protein beverages.

### Comparative Example 1

This comparative example was different from Example 1 in that a different stabilizer was adopted. That is, in this comparative example, a mixture of 1.0 g of xanthan gum and 1.0 g of mono- and diglycerides of fatty acids and a mixture of 0.2 g of carrageenan (type K) and 1.0 g of mono- and diglycerides of fatty acids were adopted as stabilizers for peanut compound protein beverages, respectively.

### Comparative Example 2

This comparative example was different from Example 2 in that a different stabilizer was adopted. That is, in this comparative example, a mixture of 1.0 g of xanthan gum and 1.0 g of mono- and diglycerides of fatty acids and a mixture of 0.2 g of carrageenan (type K) and 1.0 g of mono- and diglycerides of fatty acids were adopted as stabilizers for walnut compound protein beverages, respectively.

### Comparative Example 3

This comparative example was different from Example 3 in that a different stabilizer was adopted. That is, in this comparative example, a mixture of 1.0 g of xanthan gum and 1.0 g of mono- and diglycerides of fatty acids and a mixture of 0.2 g of carrageenan (type K) and 1.0 g of mono- and diglycerides of fatty acids were adopted as stabilizers for almond compound protein beverages, respectively.

### Test Example 1

In order to investigate the influence of an addition amount of Sanzan gum and a stabilizer composition on the stability of a peanut compound protein beverage, this test example was set.

The stability scoring criteria for compound protein beverages were shown in Table 1. A determination method of a centrifugal precipitation rate was as follows: 10 g of a compound protein beverage was centrifuged at 3,000 rpm for 10 min to obtain a precipitate, an amount of the precipitate was determined, and the centrifugal precipitation rate was calculated as follows: centrifugal precipitation amount = precipitate amount/compound protein beverage mass (10 g) × 100%. The industry standard requires a centrifugal precipitation rate of less than or equal to 3%.

**Table 1 Stability scoring criteria for compound protein beverages**

| Grade | Items | | | |
|---|---|---|---|---|
| | Appearance | Fat floating | Precipitation | Comprehensive score |
| High grade | There is a homogeneous fluid without flocci (25 to 30) | No fat floats (25 to 30) | There is no precipitate at a bottom (25 to 30) | 85 or more |
| Medium grade | There is a fluid with a small amount of flocci (20 to 25) | A small amount of fats floats on a surface (20 to 25) | There is a small amount of precipitates at a bottom (20 to 25) | 70 or more |
| Low grade | There is a large amount of flocci or a gel state is reached (less than 20) | A large amount of fats floats on a surface (less than 20) | There is a large amount of precipitates at a bottom (less than 20) | Less than 70 |

The influence of an addition amount of Sanzan gum and a stabilizer composition on the stability of a peanut compound protein beverage was shown in Table 2 and Table 3.

**Table 2 Sensory evaluation results of peanut compound protein beverages**

| Experimental group No. | Stabilizer composition | Sanzan gum/compound protein beverage (g/kg) | Comprehensive score |
|---|---|---|---|
| 1 | 1.0 g of mono- and diglycerides of fatty acids | 0 | 25 |
| 2 | 0.25 g of Sanzan gum + 1.0 g of mono- and diglycerides of fatty acids | 0.25 | 60 |
| 3 | 0.5 g of Sanzan gum + 1.0 g of mono- and diglycerides of fatty acids | 0.5 | 80 |
| 4 | 0.75 g of Sanzan gum + 1.0 g of mono- and diglycerides of fatty acids | 0.75 | 90 |
| 5 | 1.0 g of Sanzan gum + 1.0 g of mono- and diglycerides of fatty acids | 1.0 | 55 |
| 6 | 1.25 g of Sanzan gum + 1.0 g of mono- and diglycerides of fatty acids | 1.25 | 30 |
| 7 | 1.5 g of Sanzan gum + 1.0 g of mono- and diglycerides of fatty acids | 1.5 | 30 |
| 8 | 1.0 g of xanthan gum + 1.0 g of mono- and diglycerides of fatty acids | / | 85 |
| 9 | 0.2 g of carrageenan + 1.0 g of mono- and diglycerides of fatty acids | / | 85 |

**Table 3 Precipitation rate and stability test results of peanut compound protein beverages**

| Experimental group No. | Centrifugal precipitation rate, % | Stability (month 0) | Stability (month 3) |
|---|---|---|---|
| 1 | 6% | There are obvious oil slicks and precipitates | There are 5 mm oil thick slicks at a top and 5 mm thick precipitates at a bottom |
| 2 | 5% | There are obvious oil slicks and precipitates | There are 5 mm thick oil slicks at a top and 5 mm thick precipitates at a bottom |
| 3 | 2% | There are no obvious oil slicks and precipitates | There are 2 mm thick oil slicks at a top and 2 mm thick precipitates at a bottom |
| 4 | 1% | There are no obvious oil slicks and precipitates | There are 1 mm thick oil slicks at a top and there are no obvious precipitates |
| 5 | / | A gel state is reached | A gel state is reached |
| 6 | / | A gel state is reached | A gel state is reached |
| 7 | / | A gel state is reached | A gel state is reached |
| 8 | 1% | There are no obvious oil slicks and precipitates | There are 2 mm thick oil slicks at a top and 0.5 mm thick precipitates at a bottom |
| 9 | 1% | There are no obvious oil slicks and precipitates | There are 2 mm thick oil slicks at a top and 0.5 mm thick precipitates at a bottom |

According to Table 2: The experimental group 4 has a comprehensive score of 90, which is the highest score in the gradient experiment and reaches the high grade. The experimental groups 8 and 9 each have a comprehensive score of 85, which also reaches the high grade, but is lower than the comprehensive score of the experimental group 4. The experimental group 3 has a comprehensive score of 80, indicating relatively-poor performance. Comprehensive scores of all other experimental groups do not reach the medium grade, indicating poor performance. Therefore, according to sensory evaluation results, an optimal addition amount of Sanzan gum in a peanut compound protein beverage is in a range of 0.5 g/kg to 0.75 g/kg, and when an addition amount of Sanzan gum is 0.75 g/kg, a comprehensive score of a Sanzan gum system is better than that of comprehensive scores of a xanthan gum system and a carrageenan system.

According to Table 3: When the addition amount of Sanzan gum is in a range of 0 g/kg to 0.75 g/kg, a centrifugal precipitation rate gradually decreases with the increase of the addition amount of Sanzan gum. When the addition amount of Sanzan gum is 0.5 g/kg, it reaches the industry standard requirement that a centrifugal precipitation rate should be lower than or equal to 3%. When the addition amount of Sanzan gum is 0.75 g/kg, a centrifugal precipitation rate is 1%, which is the lowest centrifugal precipitation rate. When the addition amount of Sanzan gum is higher than or equal to 1.0 g/kg, a corresponding peanut compound protein beverage reaches a gel state, and a corresponding centrifugal precipitation rate is not taken as a reference. According to stability observation results (3 months): When the addition amount of Sanzan gum is in a range of 0 g/kg to 0.75 g/kg, an amount of oil slicks at a top and an amount of precipitates at a bottom tend to decrease with the increase of the addition amount of Sanzan gum. When the addition amount of Sanzan gum is 0.5 g/kg, an amount of oil slicks at a top and an amount of precipitates at a bottom are significantly reduced. When the addition amount of Sanzan gum is 0.75 g/kg, there are the smallest amount of oil slicks at a top and the smallest amount of precipitates at a bottom. When the addition amount of Sanzan gum is greater than or equal to 1.0 g/kg, a corresponding peanut compound protein beverage reaches a gel state, and a corresponding observation result is not taken as a reference. Therefore, when the addition amount of Sanzan gum to a peanut compound protein beverage is 0.5 g/kg or more, a stable suspension role can be played. When the addition amount of Sanzan gum exceeds 0.75 g/kg, a gel state is reached. A peanut compound protein beverage prepared when the addition amount of Sanzan gum is 0.75 g/kg has better stability than peanut compound protein beverages in xanthan gum and carrageenan groups.

### Test Example 2

In order to investigate the influence of an addition amount of Sanzan gum and a stabilizer composition on the stability of a walnut compound protein beverage, this test example was set.

The stability scoring criteria and the determination method of a centrifugal precipitation rate for compound protein beverages were the same as those in Test Example 1.

The influence of an addition amount of Sanzan gum and a stabilizer composition on the stability of a walnut compound protein beverage was shown in Table 4 and Table 5.

**Table 4 Sensory evaluation results of walnut compound protein beverages**

| Experimental group No. | Stabilizer composition | Sanzan gum/compound protein beverage (g/kg) | Comprehensive score |
|---|---|---|---|
| 1 | 1.0 g of mono- and diglycerides of fatty acids | 0 | 30 |
| 2 | 0.25 g of Sanzan gum + 1.0 g of mono- and diglycerides of fatty acids | 0.25 | 60 |
| 3 | 0.5 g of Sanzan gum + 1.0 g of mono- and diglycerides of fatty acids | 0.5 | 85 |
| 4 | 0.75 g of Sanzan gum + 1.0 g of mono- and diglycerides of fatty acids | 0.75 | 90 |
| 5 | 1.0 g of Sanzan gum + 1.0 g of mono- and diglycerides of fatty acids | 1.0 | 50 |
| 6 | 1.25 g of Sanzan gum + 1.0 g of mono- and diglycerides of fatty acids | 1.25 | 30 |
| 7 | 1.5 g of Sanzan gum + 1.0 g of mono- and diglycerides of fatty acids | 1.5 | 30 |
| 8 | 1.0 g of xanthan gum + 1.0 g of mono- and diglycerides of fatty acids | / | 90 |
| 9 | 0.2 g of carrageenan + 1.0 g of mono- and diglycerides of fatty acids | / | 90 |

**Table 5 Precipitation rate and stability test results of walnut compound protein beverages**

| Experimental group No. | Centrifugal precipitation rate, % | Stability (month 0) | Stability (month 3) |
|---|---|---|---|
| 1 | 4% | There are obvious oil slicks and precipitates | There are 10 mm thick oil slicks at a top and 4 mm thick precipitates at a bottom |
| 2 | 3% | There are obvious oil slicks and precipitates | There are 8 mm thick oil slicks at a top and 4 mm thick precipitates at a bottom |
| 3 | 1% | There are no obvious oil slicks and precipitates | There are 2 mm thick oil slicks at a top and 1 mm thick precipitates at a bottom |
| 4 | 1% | There are no obvious oil slicks and precipitates | There are 2 mm thick oil slicks at a top and there are no obvious precipitates at a bottom |
| 5 | / | A gel state is reached | A gel state is reached |
| 6 | / | A gel state is reached | A gel state is reached |
| 7 | / | A gel state is reached | A gel state is reached |
| 8 | 1% | There are no obvious oil slicks and precipitates | There are 2 mm thick oil slicks at a top and there are no obvious precipitates at a bottom |
| 9 | 1% | There are no obvious oil slicks and precipitates | There are 2 mm thick oil slicks at a top and there are no obvious precipitates at a bottom |

According to Table 4: Comprehensive scores of experimental groups 3, 4, 8, and 9 are 85, 90, 90, and 90, respectively, which all reach the high grade. Comprehensive scores of all other experimental groups do not reach the medium grade, indicating poor performance. Therefore, it can be seen from sensory evaluation results that an optimal addition amount of Sanzan gum in a walnut compound protein beverage is in a range of 0.5 g/kg to 0.75 g/kg, and when an addition amount of Sanzan gum is 0.75 g/kg, a corresponding sensory evaluation effect is comparable to effects of the xanthan gum group and the carrageenan group.

According to Table 5: When the addition amount of Sanzan gum is in a range of 0 g/kg to 0.75 g/kg, a centrifugal precipitation rate gradually decreases with the increase of the addition amount of Sanzan gum. When the addition amount of Sanzan gum is 0.5 g/kg and 0.75 g/kg, a centrifugal precipitation rate is 1%, which reaches the industry standard requirement that a centrifugal precipitation rate should be lower than or equal to 3%. When the addition amount of Sanzan gum is higher than or equal to 1.0 g/kg, a corresponding walnut compound protein beverage reaches a gel state, and a corresponding centrifugal precipitation rate is not taken as a reference. According to stability observation results (3 months): When the addition amount of Sanzan gum is in a range of 0 g/kg to 0.75 g/kg, an amount of oil slicks at a top and an amount of precipitates at a bottom tend to decrease with the increase of the addition amount of Sanzan gum. When the addition amount of Sanzan gum is 0.5 g/kg, an amount of oil slicks at a top and an amount of precipitates at a bottom are significantly reduced. When the addition amount of Sanzan gum is 0.75 g/kg, there are the smallest amount of oil slicks at a top and the smallest amount of precipitates at a bottom. When the addition amount of Sanzan gum is greater than or equal to 1.0 g/kg, a corresponding walnut compound protein beverage reaches a gel state, and a corresponding observation result is not taken as a reference. Therefore, when the addition amount of Sanzan gum to a walnut compound protein beverage is 0.5 g/kg or more, a stable suspension role can be played. When the addition amount of Sanzan gum exceeds 0.75 g/kg, a gel state is reached. A walnut compound protein beverage prepared when the addition amount of Sanzan gum is 0.75 g/kg has comparable stability to walnut compound protein beverages in xanthan gum and carrageenan groups.

### Test Example 3

In order to investigate the influence of an addition amount of Sanzan gum and a stabilizer composition on the stability of an almond compound protein beverage, this test example was set.

The stability scoring criteria and the determination method of a centrifugal precipitation rate for compound protein beverages were the same as those in Test Example 1.

The influence of an addition amount of Sanzan gum and a stabilizer composition on the stability of an almond compound protein beverage was shown in Table 6 and Table 7.

**Table 6 Sensory evaluation results of almond compound protein beverages**

| Experimental group No. | Stabilizer composition | Sanzan gum/compound protein beverage (g/kg) | Comprehensive score |
|---|---|---|---|
| 1 | 1.0 g of mono- and diglycerides of fatty acids | 0 | 20 |
| 2 | 0.25 g of Sanzan gum + 1.0 g of mono- and diglycerides of fatty acids | 0.25 | 55 |
| 3 | 0.5 g of Sanzan gum + 1.0 g of mono- and diglycerides of fatty acids | 0.5 | 85 |
| 4 | 0.75 g of Sanzan gum + 1.0 g of mono- and diglycerides of fatty acids | 0.75 | 90 |
| 5 | 1.0 g of Sanzan gum + 1.0 g of mono- and diglycerides of fatty acids | 1.0 | 45 |
| 6 | 1.25 g of Sanzan gum + 1.0 g of mono- and diglycerides of fatty acids | 1.25 | 30 |
| 7 | 1.5 g of Sanzan gum + 1.0 g of mono- and diglycerides of fatty acids | 1.5 | 30 |
| 8 | 1.0 g of xanthan gum + 1.0 g of mono- and diglycerides of fatty acids | / | 85 |
| 9 | 0.2 g of carrageenan + 1.0 g of mono- and diglycerides of fatty acids | / | 80 |

**Table 7 Precipitation rate and stability test results of almond compound protein beverages**

| Experimental group No. | Centrifugal precipitation rate, % | Stability (month 0) | Stability (month 3) |
|---|---|---|---|
| 1 | 4% | There are obvious oil slicks and precipitates | There are 5 mm thick oil slicks at a top and 4 mm thick precipitates at a bottom |
| 2 | 4% | There are obvious oil slicks and precipitates | There are 4 mm thick oil slicks at a top and 4 mm thick precipitates at a bottom |
| 3 | 1% | There are no obvious oil slicks and precipitates | There are 2 mm thick oil slicks at a top and 1 mm thick precipitates at a bottom |
| 4 | 1% | There are no obvious oil slicks and precipitates | There are 1 mm thick oil slicks at a top and 1 mm thick precipitates at a bottom |
| 5 | / | A gel state is reached | A gel state is reached |
| 6 | / | A gel state is reached | A gel state is reached |
| 7 | / | A gel state is reached | A gel state is reached |
| 8 | 1% | There are no obvious oil slicks and precipitates | There are 2 mm thick oil slicks at a top and about 0.5 mm thick precipitates at a bottom |
| 9 | 1% | There are no obvious oil slicks and precipitates | There are 2 mm thick oil slicks at a top and about 0.5 mm thick precipitates at a bottom |

According to Table 6: Comprehensive scores of experimental groups 3, 4, and 8 are 85, 90, and 85, respectively, which all reach the high grade. A comprehensive score of the experimental group 9 is 80, which reaches the medium grade. Comprehensive scores of all other experimental groups do not reach the medium grade, indicating poor performance. Therefore, it can be seen from sensory evaluation results that an optimal addition amount of Sanzan gum in an almond compound protein beverage is in a range of 0.5 g/kg to 0.75 g/kg.

According to Table 7: When the addition amount of Sanzan gum is in a range of 0 g/kg to 0.75 g/kg, a centrifugal precipitation rate gradually decreases with the increase of the addition amount of Sanzan gum. When the addition amount of Sanzan gum is 0.5 g/kg and 0.75 g/kg, a centrifugal precipitation rate is 1%, which reaches the industry standard requirement that a centrifugal precipitation rate should be lower than or equal to 3%. When the addition amount of Sanzan gum is higher than or equal to 1.0 g/kg, a corresponding almond compound protein beverage reaches a gel state, and a corresponding centrifugal precipitation rate is not taken as a reference. According to stability observation results (3 months): When the addition amount of Sanzan gum is in a range of 0 g/kg to 0.75 g/kg, an amount of oil slicks at a top and an amount of precipitates at a bottom tend to decrease with the increase of the addition amount of Sanzan gum. When the addition amount of Sanzan gum is 0.5 g/kg, an amount of oil slicks at a top and an amount of precipitates at a bottom are significantly reduced. When the addition amount of Sanzan gum is 0.75 g/kg, there are the smallest amount of oil slicks at a top and the smallest amount of precipitates at a bottom. When the addition amount of Sanzan gum is greater than or equal to 1.0 g/kg, a corresponding almond compound protein beverage reaches a gel state, and a corresponding observation result is not taken as a reference. Therefore, when the addition amount of Sanzan gum to an almond compound protein beverage is 0.5 g/kg or more, a stable suspension role can be played. When the addition amount of Sanzan gum exceeds 0.75 g/kg, a gel state is reached. An almond compound protein beverage prepared when the addition amount of Sanzan gum is 0.75 g/kg has better stability than almond compound protein beverages in xanthan gum and carrageenan groups.

It can be seen from the above examples that the present disclosure provides a Sanzan gum-containing stabilizer for a compound protein beverage, and a use and compound protein beverage thereof.

According to sensory scores, the Sanzan gum system is relatively stable, and scores of the xanthan gum system and the carrageenan system fluctuate to some extent in different compound protein beverages. There is no significant difference among the three gum systems in terms of a centrifugal precipitation rate. According to long-term observation (3 months) results: In peanut compound protein beverages, the Sanzan gum system has a slight advantage over the other two systems in terms of controlling the floating and precipitation conditions. In walnut compound protein beverages, there is no significant difference among the three systems in terms of stability. In almond compound protein beverages, the Sanzan gum system is slightly better than the other two stabilization systems in terms of controlling the floating condition. It can be seen from the combination of evaluation results of sensory scores and centrifugal precipitation rates that Sanzan gum has a prominent suspension and stabilization effect in a compound protein beverage.

Sanzan gum has the characteristics of a weak gel, and when an amount of the Sanzan gum is close to, but does not reach a gelation point, a network structure with a suspension and stabilization ability can be formed. This network structure itself is relatively stable, and is less affected by raw materials and a production technology. K-carrageenan also has the properties of a gel and can also form a network structure with a suspension ability. However, this network structure is greatly affected by a type of a protein, and have different reaction intensities with different proteins, which leads to the instability of its use. A suspension ability of xanthan gum is mainly determined by the excellent pseudoplasticity and high viscosity of xanthan gum, and xanthan gum has a weak suspension ability. Therefore, Sanzan gum has advantages in the preparation of compound protein beverages.

A reason why different compound protein beverages with the same Sanzan gum amount have different centrifugal precipitation rates and oil slick and precipitate amounts is analyzed from the perspective of raw materials: An oil slick amount of a compound protein beverage is closely related to fat contents in raw materials. A fat content in walnut butter is higher than fat contents in peanut butter and almond butter (a fat content in walnut butter: 70%, a fat content in peanut butter: 48%, and a fat content in almond butter: 50%). The higher the fat content, the easier the fat is to float. According to actual stability observation (3 months) results: When the addition amount of Sanzan gum is 0 g/kg to 0.25 g/kg, an oil slick amount of a walnut compound protein beverage is significantly larger than oil slick amounts of a peanut compound protein beverage and an almond compound protein beverage, and the peanut compound protein beverage has a similar oil slick amount to the almond compound protein beverage, which is caused by different fat contents in raw materials. When the addition amount of Sanzan gum is 0.5 g/kg to 0.75 g/kg, there is no significant difference in terms of an oil slick amount among the three compound protein beverages, which is due to a suspension and stabilization effect of Sanzan gum.

A centrifugal precipitation rate and a precipitate amount of a compound protein beverage are closely related to total carbohydrate contents and baking degrees of raw materials. The starch and fiber are easily precipitated. A high baking degree will cause a decline of hardening and a water holding capacity of a protein, which is also easy to cause precipitation. Peanut butter has a higher total carbohydrate content than walnut butter and almond butter, and a baking degree of peanut butter (medium well) is also higher than baking degrees of walnut butter (medium) and almond butter (medium). Therefore, when the amount of Sanzan gum is 0 g/kg to 0.25 g/kg, a walnut compound protein beverage has a lower centrifugal precipitation rate and a smaller actual observed precipitate amount than an almond compound protein beverage and a peanut compound protein beverage. When the amount of Sanzan gum is 0.5 g/kg to 0.75 g/kg, there is no significant difference among the three compound protein beverages in terms of a centrifugal precipitation rate and an actual observed precipitate amount, which is attributed to a suspension and stabilization effect of Sanzan gum. Therefore, at the same Sanzan gum amount, the differences in a centrifugal precipitation rate and oil slick and precipitate amounts among different compound protein beverages are caused by properties of raw materials, and an applicable amount range of Sanzan gum does not change and is 0.5 g/kg to 0.75 g/kg.

It can be known that, when the addition amount of Sanzan gum in a stabilizer is 0.5 g/kg to 0.75 g/kg, a corresponding compound protein beverage has the optimal sensory score and stability.

The above are merely preferred implementations of the present disclosure. It should be noted that a person of ordinary skill in the art may further make several improvements and modifications without departing from the principle of the present disclosure, but such improvements and modifications should be deemed as falling within the protection scope of the present disclosure.

## Claims

1. A Sanzan gum-containing stabilizer for a compound protein beverage, comprising Sanzan gum and mono- and diglycerides of fatty acids,
wherein a mass ratio of the Sanzan gum to the mono- and diglycerides of fatty acids is (50-75): 100.

2. A use of the stabilizer according to claim 1 in a production of a beverage.

3. A use of the stabilizer according to claim 1 in a production of the compound protein beverage.

4. A compound protein beverage comprising the stabilizer according to claim 1.

5. The compound protein beverage according to claim 4, wherein an amount of the stabilizer in the compound protein beverage is 0.15% to 0.175% of a mass of the compound protein beverage.

6. A preparation method of the compound protein beverage according to claim 4 or 5, comprising the following steps:
(1) mixing the stabilizer with white granulated sugar, adding water, and allowing dissolution under shearing to obtain a colloid solution;
(2) mixing a vegetable protein with sodium bicarbonate, adding water, allowing dissolution under shearing to obtain a solution, and filtering the solution through a 100-mesh to 140-mesh sieve to obtain a filtrate that is a vegetable protein solution;
(3) adding water to an animal protein, allowing dissolution under shearing, and allowing a static hydration to obtain an animal protein solution; and
(4) mixing the colloid solution, the vegetable protein solution, and the animal protein solution to obtain a mixed solution, and subjecting the mixed solution to a dilution, a homogenization, a bottling, a sterilization, and a cooling to obtain the compound protein beverage, wherein the dilution is a process of diluting a liquid to a predetermined amount or volume.

7. The preparation method according to claim 6, wherein in the step (1), the water has a temperature of 80°C to 85°C, and the shearing is conducted at a rotational speed of 2,800 r/min to 3,200 r/min for 13 min to 17 min;
in the step (2), the water has a temperature of 70°C to 80°C, and the shearing is conducted at a rotational speed of 2,800 r/min to 3,200 r/min for 8 min to 12 min; and
in the step (3), the water has a temperature of 55°C to 60°C, the shearing is conducted at a rotational speed of 2,800 r/min to 3,200 r/min for 4 min to 6 min, and the static hydration is conducted for 28 min to 32 min.

8. The preparation method according to claim 7, wherein in the step (2) and the step (3), the vegetable protein is any one of peanut butter, walnut butter, and almond butter, and the animal protein is a whole milk powder.

9. The preparation method according to claim 8, wherein in the step (4), the homogenization is conducted 2 to 3 times at a temperature of 70°C to 75°C and a pressure of 30 MPa to 50 MPa.

10. The preparation method according to claim 9, wherein in the step (4), the sterilization is conducted at a temperature of 121°C to 125°C for 15 min to 20 min.
